Europäisches Patentamt

European Patent Office

Office européen des brevets

(19)

(11)  **EP 1 110 302 B1**

(12)  **EUROPÄISCHE PATENTSCHRIFT**

(45) Veröffentlichungstag und Bekanntmachung des Hinweises auf die Patenterteilung:
**05.04.2006  Patentblatt 2006/14**

(21) Anmeldenummer: **99952392.1**

(22) Anmeldetag: **13.08.1999**

(51) Int Cl.:
*H02P 9/30* (2006.01)

(86) Internationale Anmeldenummer:
**PCT/DE1999/002540**

(87) Internationale Veröffentlichungsnummer:
**WO 2000/013304 (09.03.2000 Gazette 2000/10)**

(54)  **VERFAHREN ZUR BEGRENZUNG EINES ELEKTRISCHEN STROMS DURCH EIN ELEKTRISCHES BAUTEIL UND BEGRENZUNGSVORRICHTUNG**

METHOD FOR LIMITING AN ELECTRIC CURRENT PASSING THROUGH AN ELECTRICAL COMPONENT AND LIMITING DEVICE

PROCEDE POUR LIMITER UN COURANT ELECTRIQUE PASSANT A TRAVERS UN COMPOSANT ELECTRIQUE ET DISPOSITIF LIMITEUR

(84) Benannte Vertragsstaaten:
**AT BE CH CY DE DK ES FI FR GB GR IE IT LI LU MC NL PT SE**

(30) Priorität: **31.08.1998  DE 19839623**

(43) Veröffentlichungstag der Anmeldung:
**27.06.2001  Patentblatt 2001/26**

(73) Patentinhaber: **SIEMENS AKTIENGESELLSCHAFT**
**80333 München (DE)**

(72) Erfinder:
• **HOFMANN, Hermann**
**D-90427 Nürnberg (DE)**
• **KUTZNER, Rüdiger**
**D-91056 Erlangen (DE)**
• **STEINBRINK, Jörn**
**D-45468 Mülheim an der Ruhr (DE)**

(56) Entgegenhaltungen:
**EP-A- 0 104 450**        **DE-A- 4 141 837**
**US-A- 5 321 308**        **US-A- 5 373 205**

**Beschreibung**

Die Erfindung betrifft ein Verfahren zur Begrenzung eines elektrischen Stroms durch ein elektrisches Bauteil, insbesondere eine elektrische Wicklung und eine Begrenzungsvorrichtung, mit der ein elektrischer Strom durch ein elektrisches Bauteil begrenzbar ist.

Aus der US PS 5 321 308 geht eine Regelung für einen Erregerstrom durch die Läuferwicklung eines Generators hervor. Die Temperatur des Läufers wird mit Hilfe des Erregerstroms und des ohmschen Widerstands der Läuferwicklung berechnet. Dabei wird eine bekannte Widerstands-Temperatur-Beziehung für Kupfer zugrunde gelegt. Im Falle einer Überhitzung des Läufers wird der Erregerstrom reduziert.

Die US PS 5 198 744 zeigt einen Generator, insbesondere einen Anlasser für ein Kraftfahrzeug. Ein Erregerstrom durch eine Erregerwicklung des Generators wird abhängig von einer Meßtemperatur im Generator geregelt. Vorzugsweise werden Temperaturen an bestimmten Stellen im Generator aus der Meßtemperatur berechnet. Die Regelung des Erregerstroms anhand der Generatortemperatur erlaubt einen Betrieb des Generators in einem zeitweise übererregten Zustand oder bei hohen Umgebungstemperaturen.

Aus der DE 41 41 837 A1 ist ein Generator, insbesondere zur Energieversorgung eines Kraftfahrzeuges, bekannt, bei dem ebenfalls ein Erregerstrom durch eine Erregerwicklung des Generators abhängig von einer Temperatur, und zwar an oder in einem Spannungsregler, geregelt wird. Dabei ist vorgesehen, dass bei Überschreiten eines kritischen Temperaturwerts ein weiterer Temperaturanstieg infolge eines zu hohen Erreger stroms vermieden wird. Hierzu wird der Erregerstrom in geeigneter Weise reduziert.

Aus der US 5,373,205 ist ein mathematisches Modell zur Ermittlung der Temperatur eines elektronischen Schaltbauteils, beispielsweise eines Transistors, für eine Motorsteuerung zu entnehmen. Das Temperaturmodell gründet auf einer exponentiellen Zeitfunktion. Die Berrechnung der Temperatur mit dem Modell wird periodisch durchgeführt, wobei die berechneten Temperaturwerte mit einem maximal erlaubbaren Temperaturwert verglichen wird. Der berrechnete Temperaturwert ist dabei eine Funktion sowohl des momentanen Stroms durch das Bauteil als auch eine Funktion des Stroms in der vorangegangenen Periode.

Aufgabe der Erfindung ist die Angabe eines Verfahrens zur Begrenzung eines elektrischen Stroms durch ein elektrisches Bauteil, bei dem eine Überhitzung des elektrischen Bauteiles sicher vermieden, gleichzeitig aber ein ausreichend großer elektrischer Strom durch das elektrische Bauteil geleitet werden kann. Weitere Aufgabe der Erfindung ist die Angabe einer Begrenzungsvorrichtung für einen elektrischen Strom durch ein elektrisches Bauteil, mit der eine hohe Ausschöpfung der Größe des elektrischen Stroms bei einer gleichzeitig hohen Betriebssicherheit erreicht wird.

Erfindungsgemäß wird die auf ein Verfahren gerichtete Aufgabe gelöst durch ein Verfahren zur Begrenzung eines elektrischen Stroms durch ein elektrisches Bauteil, bei dem ein zeitlicher Temperaturverlauf für das elektrische Bauteil bestimmt und daraus eine thermische Belastung für das elektrische Bauteil gewonnen wird, wobei der elektrische Strom so begrenzt wird, daß die thermische Belastung unter einem vorgebbaren Belastungsmaximalwert bleibt, wobie eine Grenztemperatur für das elektrische Bauteil dadurch definiert ist, daß das elektrische Bauteil oberhalb der Grenztemperatur nach einer gewissen Zeit beschädigt wird, wobei die thermische Belastung durch eine Summation oder Integration des Anteils des zeitlichen Temperaturverlaufs berechnet wird, bei dem die Temperatur oberhalb der Grenztemperatur liegt.

Die thermische Belastung des elektrischen Bauteils ist ein Maß für die Materialbeanspruchung des Bauteils aufgrund von über einen Zeitbereich vorliegenden hohen Temperaturen. Indem der elektrische Strom anhand der thermischen Belastung begrenzt wird, wird einerseits erreicht, daß das elektrische Bauteil nicht über ein erlaubtes Maß hinaus thermisch belastet wird. Andererseits wird der elektrische Strom in seiner Größe und Dauer voll ausgeschöpft, da über die thermische Belastung die Größe und Dauer des elektrischen Stromes so hoch bzw. lang eingestellt werden kann, daß sich gerade noch keine Gefährdung für das elektrische Bauteil ergibt. Mit anderen Worten: Der elektrische Strom kann einen maximalen Wert und/oder eine maximale Haltedauer unter der Vorgabe einer sicheren Vermeidung von Schäden durch thermische Überlastung annehmen. Eine Regelung allein aufgrund der Temperatur des elektrischen Bauteils gewährleistet keine volle Ausschöpfung des elektrischen Stroms, da momentan hohe Temperaturen hinsichtlich einer thermischen Belastung des elektrischen Bauteils anders zu bewerten sind, als über einen längeren Zeitraum erhöhte Temperaturen.

Die Grenztemperatur ist jene Temperatur, oberhalb der für das elektrische Bauteil nach einer im Maßstab der durchschnittlichen Lebensdauer signifikanten Zeit thermische Schäden auftreten. Durch die Definition der Grenztemperatur wird mit anderen Worten eine Größe an die Hand gegeben, oberhalb der eine signifikante thermische Belastung des elektrischen Bauteils auftritt. Die thermische Belastung wird durch eine Summation und/oder durch eine Integration der Temperaturen in jener Zeitspanne oder in jenen Zeitspannen erreicht, bei der die Temperatur oberhalb der Grenztemperatur liegt.

Bevorzugt wird zur Berechnung der thermischen Belastung eine thermische Zeitkonstante des elektrischen Bauteils herangezogen, welche thermische Zeitkonstante eine charakteristische Aufwärm- oder Abkühlzeit des elektrischen Bauteils angibt. Mit Hilfe der thermischen Zeitkonstante wird eine thermische Trägheit des elektrischen Bauteils bei der Berechnung der thermischen Belastung berücksichtigt. Wird z. B. bei einer Temperatur oberhalb der Grenztemperatur der elektrische Strom abgeschaltet, so ergibt sich ein - in der Regel exponentielles - Abklingen der Temperatur des elektrischen Bauteils. Über einen gewissen Zeitbereich wird somit die Temperatur des elektrischen Bauteils trotz eines abgeschalteten elektrischen Stroms noch oberhalb der Grenztemperatur liegen. Daraus resultiert eine thermische Belastung für das elektrische Bauteil, die für die Steuerung der Begrenzung eines wieder zugeschalteten elektrischen Stroms herangezogen wird.

Bevorzugt wird die thermische Belastung aus folgender Formel gewonnen:

$$b(t_0) = \frac{1}{A} \int_0^{t_0} T(t) - T_G \quad dt \qquad ,$$

wobei

b($t_0$): die thermische Belastung über die Zeit $t_0$,
T(t): die Temperatur des elektrischen Bauteils in Abhängigkeit von der Zeit,
$T_G$: die Grenztemperatur und
A: eine Integrationskonstante ist.

Die Integrationskonstante A gibt die thermische Trägheit des elektrischen Bauteils wieder. Sie wird vorzugsweise nach folgender Formel berechnet:

$$A = Z \left[ (T_s - T_G) \ln \frac{T_s - T_G}{T_s - T_u} \right],$$

wobei

Z: die thermische Zeitkonstante des elektrischen Bauteils,

$T_S$: die sich bei statischem Strom einstellende Temperatur des elektrischen Bauteils und

$T_u$: die momentane Temperatur des elektrischen Bauteils ist, bei der der elektrische Strom abgeschaltet wird.

Bevorzugt wird der zeitliche Temperaturverlauf gemessen oder berechnet. Der zeitliche Temperaturverlauf für die Temperatur des elektrischen Bauteils kann kontinuierlich oder auch in einer diskreten Abfolge über eine geeignete Meßvorrichtung gemessen werden. Der so gemessene zeitliche Temperaturverlauf wird dann zur Bestimmung der thermischen Belastung herangezogen. Der zeitliche Temperaturverlauf kann aber auch berechnet werden. Vorzugsweise wird dazu die Temperatur des elektrischen Bauteils in Abhängigkeit des elektrische Stroms berechnet, wobei aus dieser Abhängigkeit mit Hilfe des zeitlichen Verlaufs des elektrischen Stroms der zeitliche Temperaturverlauf berechnet wird. Die Berechnung der Temperatur des elektrischen Bauteils in Abhängigkeit des elektrischen Stroms kann durch die Berücksichtigung des ohmschen Widerstands des elektrischen Bauteils erfolgen. Vorzugsweise wird auch der thermische Widerstand des elektrischen Bauteils berücksichtigt. Weiter bevorzugt gehen in die Berechnung der Temperatur nichtelektrische Verluste, z. B. Reibungsverluste, und/oder eine Kühlmitteltemperatur eines das elektrische Bauteil kühlenden Kühlfluids ein.

Eine Berechnung der Bauteiltemperatur in Abhängigkeit vom elektrischen Strom erfolgt vorzugsweise nach der Formel:

$$T = \frac{1}{T_1 - R_T R_o (20°C) x I^2} \left[ T_1 (T_K + T_R) - R_T R_o (20°C) I^2 (T_2 + (1-x)(T_K + T_R)) \right]$$

Es sind:

T:             Bauteiltemperatur;

$R_T$:          Thermischer Widerstand;

$R_o(20°C)$ :    ohmscher Widerstand bei 20°C;

x:             Wichtungsfaktor für mittlere Bauteiltemperatur;

I:              elektrischer Strom durch das Bauteil;

$T_K$:         Kühlmitteltemperatur;

$T_R$:         Temperaturerhöhung durch nichtelektrische Verluste.

$T_1$, $T_2$:      Konstanten, vorzugsweise $T_1$ = 255 °C, $T_2$ = 235 °C

Die Berechnung der Temperatur des elektrischen Bauteils erspart den meßtechnischen Aufwand für eine Messung der Temperatur des elektrischen Bauteils. Bei z.B. einer Läuferwicklung eines Generators ist dieser Aufwand erheblich, da der Meßwert für die Temperatur von dem rotierenden Läufer abgefragt werden muß.

Bevorzugtermaßen wird der elektrische Strom durch die Läuferwicklung und/oder Statorwicklung eines Generators, insbesondere eines Turbogenerators mit einer Leistung größer als 10 MVA, vorzugsweise größer als 100 MVA, begrenzt. Durch die sehr hohen Leistungsdichten in einem Turbogenerator können in dessen elektrischen Wicklungen sehr hohe Temperaturen auftreten, welche die Wicklung unter Umständen erheblich schädigen. Die besonders hohen Anforderungen an die Betriebssicherheit eines Generators erfordern ein besonders sicheres Verfahren zur Begrenzung des elektrischen Stroms durch eine elektrische Wicklung des Generators und besonders genaue Aussagen über die Temperatur dieser elektrischen Wicklung. Dies wird in besonders zuverlässiger und doch einfacher Weise durch die Begrenzung des elektrischen Stroms mittels der Bestimmung der thermischen Belastung der elektrischen Wicklung gewährleistet.

Vorzugsweise ist der elektrische Strom ein Erregerstrom durch den Läufer, wobei eine als "Stoßerregung" bezeichnete, schlagartige Erhöhung des Erregerstroms auf einen Mehrbedarfswert erfolgt. Bei einem Generator können kurzzeitige Bedarfsspitzen für dessen abgegebene Leistung entstehen. Eine solche Bedarfsspitze äußert sich bei einem an ein Netz angeschlossenen Generator in einem Absacken der Netzspannung. Dies wird dadurch kompensiert, daß der Erregerstrom durch den Läufer erhöht wird. Diese Erhöhung hat ein verstärktes magnetisches Erregerfeld des Läufers zur Folge, wodurch im Stator eine höhere Spannung induziert wird. Diese kurzfristige, schlagartige Erhöhung des Erregerstroms wird als Stoßerregung bezeichnet. Der Erregerstrom wird in kurzer Zeit auf einen bestimmten Mehrbedarfswert erhöht. Durch diesen höheren Strom kommt es in der Regel zu einer Erwärmung der elektrischen Wicklung über die Grenztemperatur hinaus und damit zu einer thermischen Belastung der elektrischen Wicklung. Üblicherweise wurde bislang die Erhöhung des Erregerstroms auf ein bestimmtes Zeitfenster, also eine vorgegebene Zeitspanne, begrenzt. Nach Ablauf dieses Zeitfensters mußte der Erregerstrom auf seinen Nennwert begrenzt werden. Dies hat zwei Probleme zur Folge:

Zum einen kann das Zeitfenster zu kurz sein, d.h. je nach der der Stoßerregung vorausgegangenen thermischen Belastung der elektrischen Wicklung könnte der erhöhte Erregerstrom auch eine längere Zeit bei Mehrbedarfswert gehalten werden. Dadurch könnte man der erhöhten Netzanforderung besser gerecht werden.

Zum anderen kann es bei kurz aufeinanderfolgenden Schwankungen in der Netzspannung zu aufeinanderfolgenden Stoßerregungen kommen. In diesem Fall würde der Erregerstrom durch eine unmittelbar auf eine erste Stoßerregung folgende zweite Stoßerregung gleich nach seiner Begrenzung auf den Nennwert wiederum auf den Mehrbedarfswert angehoben werden. Bei mehreren aufeinanderfolgenden Stoßerregungen kann es somit trotz des vorgesehenen Zeitfensters zu einer unzulässig hohen thermischen Belastung der elektrischen Wicklung kommen.

Diese Nachteile werden durch eine Begrenzung des Erregerstroms über eine Steuerung mittels der thermischen Belastung der elektrischen Wicklung vermieden. Durch die Ermittlung der thermischen Belastung ist erkennbar, ob der Erregerstrom noch über eine längere Zeit auf dem Mehrbedarfswert gehalten werden kann oder ob eine Stoßerregungsbegrenzung erfolgen muß. Vorzugsweise wird der Erregerstrom dabei über eine Haltedauer auf dem Mehrbedarfswert gehalten, wobei die Haltedauer anhand der thermischen Belastung bestimmt wird. Bevorzugt erfolgt eine erste Stoßerregung, wobei eine auf die erste Stoßerregung folgende zweite Stoßerregung nur dann zugelassen wird, wenn die Temperatur der Läuferwicklung unterhalb der Grenztemperatur liegt. Vorzugsweise wird ein minimaler Zeitabstand zwischen zwei aufeinanderfolgenden Stoßerregungen vorgesehen, der in jedem Falle eingehalten wird.

Vorzugsweise wird eine Kühlfluidtemperatur eines Kühlfluides für das Bauteil gemessen und die Bauteiltemperatur des elektrischen Bauteils mittels des elektrischen Stroms und der Kühlfluidtemperatur berechnet, wobei der elektrische Strom so begrenzt wird, daß die Bauteiltemperatur einen vorgebbaren Maximalwert nicht überschreitet.

Über die Kühlfluidtemperatur gewinnt man eine Information über die thermische Belastung des elektrischen Bauteils. Die Bauteiltemperatur kann nun anhand des elektrischen Stroms und anhand der Kühlfluidtemperatur sicher berechnet werden. Eine solche Berechnung erspart den apparativen Aufwand der Messung einer Bauteiltemperatur. Dieser apparative Aufwand ist insbesondere für rotierende elektrische Wicklungen einer elektrischen Rotationsmaschine erheblich.

Vorzugsweise wird bei einem elektrischen Bauteil, das eine elektrische Wicklung einer elektrischen Rotationsmaschine und insbesondere eine Läuferwicklung eines Turbogenerators ist, die Bauteiltemperatur unter Berücksichtigung des thermischen Widerstands des Bauteils, des ohmschen Widerstands des Bauteils und der nichtelektrischen Verluste berechnet. Bei einem wasserstoffgekühlten Turbogenerator wird bevorzugt der Wasserstoffdruck bei der Berechnung berücksichtigt.

Erfindungsgemäß wird die auf eine Begrenzungsvorrichtung gerichtete Aufgabe gelöst durch eine Begrenzungsvorrichtung für einen elektrischen Strom durch ein elektrisches Bauteil einer Integrationseinheit zur Integration oder Summation eines zeitlichen Verlaufs einer Bauteiltemperatur und mit einer mit der Integrationseinheit verbundenen Begrenzungseinheit zur Begrenzung des Stroms in Abhängigkeit von einem Ausgabegemäß Anspruch 13.

Die Vorteile einer solchen Begrenzungsvorrichtung ergeben sich entsprechend den obigen Ausführungen zu den Vorteilen eines Verfahrens zur Begrenzung eines elektrischen Stroms.

Vorzugsweise wird die Begrenzungsvorrichtung zur Begrenzung des Erregerstroms in einem Läufer eines Turbogenerators eingesetzt.

Die Erfindung wird in einem Ausführungsbeispiel näher erläutert. Es zeigen teilweise schematisch:

FIG 1    eine schematische Darstellung eines Verfahrens zur Begrenzung eines elektrischen Stroms durch eine elektrische Wicklung,

FIG 2    eine detailliertere, schematische Darstellung eines Verfahrensschrittes aus Figur 1 und

FIG 3    einen zeitlichen Stromverlauf bei einer Stoßerregung und ein Diagramm für eine daraus folgende thermische Belastung.

Gleiche Bezugszeichen haben in den verschiedenen Figuren die gleiche Bedeutung.

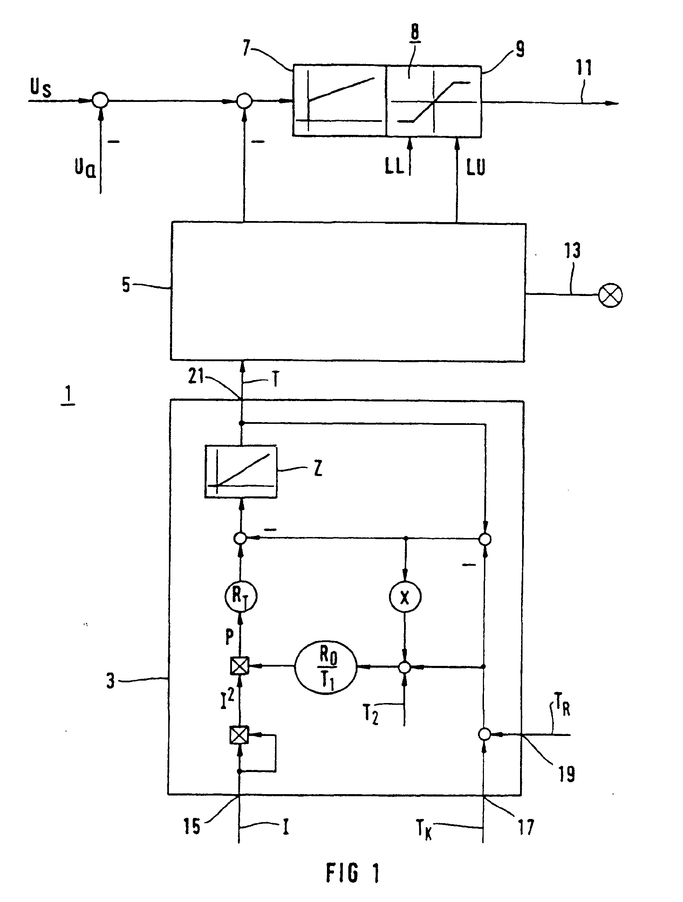

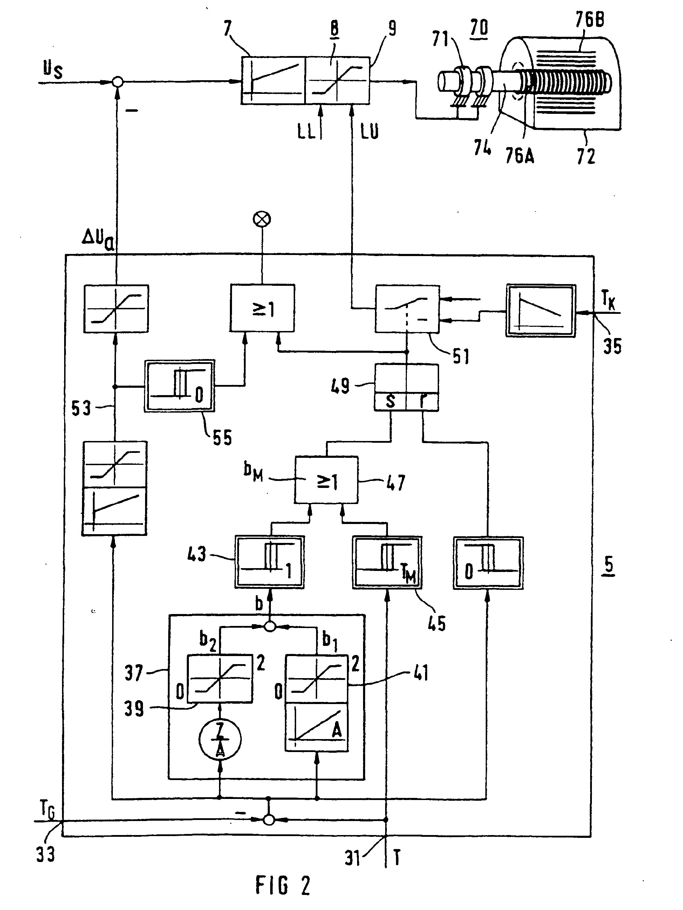

Figur 1 zeigt eine Begrenzungsvorrichtung 1 für einen elektrischen Strom I durch ein elektrisches Bauteil 76, hier eine elektrische Wicklung 76 (siehe Figur 2). Durch die Begrenzungsvorrichtung 1 ist ein Verfahren zur Begrenzung des elektrischen Stroms I durch die elektrische Wicklung 76 durchführbar. Dazu wird in einer ersten Berechnungseinheit 3 die Temperatur T der elektrischen Wicklung 76 berechnet. In einer zweiten Berechnungseinheit 5 wird aus der so berechneten Temperatur ein Grenzwert für den elektrischen Strom I durch die elektrische Wicklung 76 ermittelt. Mit Hilfe einer Begrenzungseinheit 8, bestehend aus einem PI-Regler 7 und einem Grenzwertgeber 9, wird dann der elektrische Strom I begrenzt.

Zur Berechnung der Temperatur T der elektrischen Wicklung 76 wird der ersten Berechnungseinheit 3 über einen Eingang 15 der aktuelle Wert des elektrischen Stroms I zugeführt. Über einen Eingang 17 wird bei einer - wie in diesem Beispiel vorliegenden - gekühlten elektrischen Wicklung 76 der Wert $T_K$ der Kühlmitteltemperatur zugeführt. Weiterhin wird über einen Eingang 19 der ersten Berechnungseinheit 3 ein Wert $T_R$ zugeführt, der der Temperaturerhöhung entspricht, welche durch nichtelektrische Verluste hervorgerufen wird. Mit Hilfe dieser Werte wird der ohmsche Widerstand der elektrischen Wicklung in Abhängigkeit von der Temperatur T berechnet. Vorzugsweise geschieht dies nach folgender Formel:

$$R_o(T) = \frac{R_o(20^\circ C)}{T_1}\left[T_2 + T_K + T_R + x(T - (T_K + T_R))\right]$$

Dabei sind:

$R_0(T)$:    ohmscher Widerstand der elektrischen Wicklung in Abhängigkeit von der Temperatur;

$R_o(20^\circ C)$:    der ohmsche Widerstand der elektrischen Wicklung bei 20°C;

$T_K$:    Temperatur des Kühlmittels;

$T_R$:    durch nichtelektrische Verluste, z.B. Reibung, hervorgerufene Temperaturerhöhung der elektrischen Wicklung;

$T_1, T_2$:    Konstanten, vorzugsweise $T_1$=255°C und $T_2$=235°C.

x:    Wichtungsfaktor für mittlere Wicklungstemperatur;

Aus dem ohmschen Widerstand $R_o$ und dem elektrischen Strom I wird die Leistung P gemäß

$$P = R_O \bullet I^2$$

ermittelt.

Aus dem thermischen Widerstand $R_T$ der elektrischen Wicklung und aus der thermischen Zeitkonstante Z der elektrischen Wicklung ergibt sich die zeitliche Änderung der Temperatur T der elektrischen Wicklung nach der Zeit t zu

$$\frac{dT}{dt} = \frac{1}{Z}\left[R_T P - \left(T(t) - \left(T_K + T_R\right)\right)\right]$$

Die Temperatur T der elektrischen Wicklung ergibt sich sodann gemäß der Formel

$$T = \frac{1}{T_1 - R_T R_o (20°C) x I^2}\left[T_1(T_K + T_R) - R_T R_o (20°C)I^2(T_2 + (1-x)(T_K + T_R))\right]$$

Es sind:

T: Wicklungstemperatur;
$R_T$: Thermischer Widerstand;
$R_o(20°C)$: ohmscher Widerstand bei 20°C;
x: Wichtungsfaktor für mittlere Wicklungstemperatur;
I: elektrischer Strom durch die Wicklung;
$T_K$: Kühlmitteltemperatur;
$T_R$: Temperaturerhöhung durch nichtelektrische Verluste.
$T_1, T_2$: Konstanten, vorzugsweise $T_1$ = 255 °C, $T_2$ = 235 °C

Der so berechnete Wert für die Temperatur T der elektrischen Wicklung wird an die zweite Berechnungseinheit 5 geleitet, die eine Begrenzung des elektrischen Stroms I ermittelt. Dies wird näher anhand von Figur 2 erläutert.

In Figur 2 ist schematisch die zweite Berechnungseinheit 5 zur Begrenzung des elektrischen Stroms I aus Figur 1 dargestellt. Der zweiten Berechnungseinheit 5 wird an einem Eingang 31 der Wert der Temperatur T der elektrischen Wicklung zugeführt. An einem Eingang 33 wird ein Wert für eine Grenztemperatur $T_G$ zugeführt. Diese Grenztemperatur $T_G$ ist die Temperatur, oberhalb der für die elektrische Wicklung mit thermisch bedingten Schäden gerechnet werden muß. An einem Eingang 35 wird der zweiten Berechnungseinheit 5 der Wert der Kühlmitteltemperatur $T_K$ zugeführt.

Liegt die Temperatur T der elektrischen Wicklung oberhalb der Grenztemperatur $T_G$, so wird der zeitliche Temperaturverlauf (T(t)) in einer Integrationseinheit 37 aufintegriert. Diese Integration führt zur thermischen Belastung b der elektrischen Wicklung. Sie wird vorzugsweise gemäß folgender Formel berechnet:

$$b(t_0) = \frac{1}{A}\int_0^{t_0} T(t) - T_G \quad dt \qquad ,$$

wobei

$b(t_0)$: die thermische Belastung über die Zeit $t_0$,

T(t): die Temperatur der elektrischen Wicklung in Abhängigkeit von der Zeit,

$T_G$: die Grenztemperatur und

A: eine Integrationskonstante ist.

Die Integration ist vorzugsweise in zwei Teile aufgespalten, d.h. die thermische Belastung b ist die Summe aus einem ersten Teil $b_1$ einer Aufwärmphase der elektrischen Wicklung und einem zweiten Teil $b_2$ einer Abkühlphase der elektrischen Wicklung. Im zweiten Teil b2 wird ein Temperaturabfall aufintegriert. Der Temperaturabfall wird vorzugsweise als ein exponentielles Abklingen approximiert. Die Integrationskonstante A ist vorzugsweise nach folgender Formel definiert:

$$A = Z\left[\left(T_s - T_G\right)\ln\frac{T_s - T_G}{T_s - T_u}\right],$$

wobei

Z: die thermische Zeitkonstante der elektrischen Wicklung,

$T_s$: die sich bei einem konstant über Nennwert liegenden Strom einstellende Temperatur der elektrischen Wicklung und

$T_u$: die momentane Temperatur der elektrischen Wicklung ist, bei der der elektrische Strom reduziert wird.

Durch die Integration des zeitlichen Temperaturverlaufs T(t) oberhalb der Grenztemperatur $T_G$ erhält man einen zuverlässigen Wert für die thermische Belastung b der elektrischen Wicklung 76. Mit Hilfe dieses Werts für die thermische Belastung b läßt sich nun ein elektrischer Strom I durch die elektrische Wicklung 76 angepaßt an den Betriebszustand zuverlässig regeln. Mit Hilfe eines Grenzwertgebers 43 wird festgestellt, ob die thermische Belastung b einen vorgegebenen Grenzwert $b_m$ in einem Speicher 47 überschreitet. Zusätzlich wird mit Hilfe eines Grenzwertgebers 45 geprüft, ob die Temperatur T der elektrischen Wicklung 76 oberhalb einer Maximaltemperatur $T_M$ liegt. Sollte eine dieser beiden Bedingungen zutreffen, so wird mit Hilfe des Flip-Flops 49 und des Schalters 51 eine Begrenzung für den elektrischen Strom I eingeschaltet.

Im hier gezeigten Beispiel wird der elektrische Strom I durch eine Läuferwicklung 76A eines Läufers 74 in einem Turbogenerator 70 gesteuert. Durch den elektrischen Strom I wird über die Läuferwicklung 76A ein Magnetfeld aufgebaut, welches bei Rotation des Läufers 74 in einer Statorwicklung 76B eines Stators 72 eine Spannung hervorruft. Für diese Spannung ist ein Sollwert $U_S$ vorgegeben. Der Regelkreis 53 gibt einen Wert $\Delta U_A$ aus. Mittels des Regelkreises 53 wird über größere Zeiträume hinweg die Klemmenspannung $U_A$ durch eine Regelung des Wertes $\Delta U_A$ so geregelt, daß die Temperatur T der Wicklung nicht zu hoch wird.

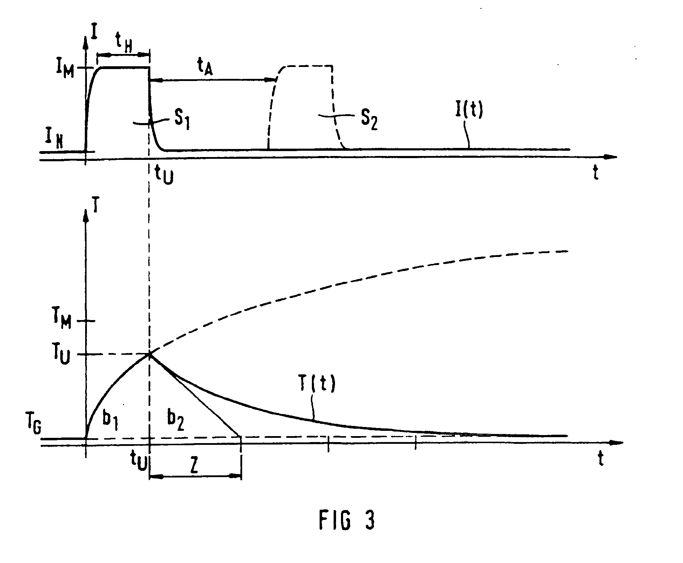

Kommt es z.B. durch einen Kurzschluß im Netz zu einem Absakken der Spannung $U_A$, so muß kurzfristig und schlagartig der elektrische Strom I durch die Läuferwicklung 76A erhöht werden. Dieser Vorgang wird als Stoßerregung bezeichnet und wird anhand von Figur 3 näher erläutert.

Figur 3 zeigt den zeitlichen Verlauf (I(t)) eines elektrischen Stroms I durch eine Läuferwicklung 76A bei einer Stoßerregung. In der gleichen Zeitskala ist darunter weiterhin der Temperaturverlauf (T(t)) für die Temperatur T der Läuferwicklung 76A dargestellt. Der elektrische Strom I wird bei einer ersten Stoßerregung $S_1$ von seinem Nennwert IN auf einen Mehrbedarfswert $I_M$ schlagartig angehoben. Auf diesem Mehrbedarfswert $I_M$ wird er über eine Haltedauer $t_H$ gehalten. Dann wird er wieder auf den Nennwert IN zurückgeregelt. In einem Zeitabstand $t_A$ ist eine zweite Stoßerregung $S_2$ gestrichelt dargestellt.

Der elektrische Strom I darf nur über eine gewisse Zeit auf dem Mehrbedarfswert $I_M$ gehalten werden, da sich sonst die elektrische Wicklung 76 unzulässig erwärmt. Bisher wurde deswegen ein maximales Zeitfenster, z.B. 10 Sekunden, für die Haltedauer $t_H$ vorgegeben. Wenn die elektrische Wicklung 76 vor Anheben des elektrischen Stroms I relativ kühl war, so kann dieses fest vorgegebene Zeitfenster zu kurz sein, d.h. der Strom I könnte unbedenklich auch noch eine längere Zeit fließen, so daß man der höheren Netzanforderung besser gerecht werden kann.

Nach bisheriger Regelung konnte weiterhin der Strom I sofort nach Ablauf des vorgegebenen Zeitfensters, also unmittelbar nach der Zurückregelung auf den Nennwert IN, wieder auf den Mehrbedarfswert $I_M$ angehoben werden. Bei mehreren, kurz aufeinander folgenden Stoßerregungen $S_1$, $S_2$, kann es damit zu einer unzulässig hohen Erwärmung der elektrischen Wicklung 76 kommen, da sich die Haltedauern $t_H$ für den Mehrbedarfswert $I_M$ quasi summieren.

Durch die Erfindung werden diese Probleme behoben. Für die Regelung des elektrischen Stroms I wird kein starres Zeitfenster, sondern eine tatsächliche thermische Belastung b der elektrischen Wicklung 76 zugrunde gelegt. Die thermische Belastung b ergibt sich durch Integration des zeitlichen Temperaturverlaufs (T(t)) für Temperaturen, die oberhalb der Grenztemperatur $T_G$ liegen. Während der Haltedauer $t_H$ des elektrischen Stroms I auf dem Mehrbedarfswert $I_M$ steigt die Temperatur T der elektrischen Wicklung 76 an. Nach Zurückregelung auf den Nennwert IN klingt die Temperatur T exponentiell ab. Mit Hilfe der thermischen Belastung b ist nun genau feststellbar, wie lange der Strom I auf seinem Mehrbedarfswert $I_M$ gehalten werden kann, ohne zu einer unzulässig hohen Erwärmung der elektrischen Wicklung 76 zu führen. Außerdem wird für zwei aufeinanderfolgende Stoßerregungen $S_1$, $S_2$ festgelegt, wann frühestens die zweite Stoßerregung $S_2$ auf die erste Stoßerregung $S_1$ folgen darf. Vorzugsweise ist dies erst dann der Fall, wenn die Temperatur T der elektrischen Wicklung unterhalb der Grenztemperatur $T_G$ liegt. Die Stoßerregung $S_2$ ist somit gesperrt, da die Stoßerregung $S_2$ nach einer Zeitdauer $t_A$ angefordert wird, innerhalb welcher Zeitdauer $t_A$ die Temperatur T noch oberhalb der Grenztemperatur $T_G$ liegt. Durch eine solche Sperrung kann es nicht zur obenerwähnten Aufsummation von Haltedauern $t_H$ und damit nicht zu einer unzulässig hohen Erwärmung der elektrischen Wicklung 76 kommen.

**Patentansprüche**

1. Verfahren zur Begrenzung eines elektrischen Stroms (I) durch ein elektrisches Bauteil (76), bei dem ein zeitlicher Temperaturverlauf (T(t)) für das elektrische Bauteil (76) bestimmt und daraus eine thermische Belastung (b) für das elektrische Bauteil (76) gewonnen wird, wobei der elektrische Strom (I) so begrenzt wird, daß die thermische Belastung (b) unter einem vorgebbaren Belastungsmaximalwert ($b_M$) bleibt, **dadurch gekennzeichnet, dass** eine Grenztemperatur ($T_G$) für das elektrische Bauteil (76) **dadurch** definiert wird, daß oberhalb der Grenztemperatur ($T_G$) mit thermisch bedingten Schäden für das elektrische Bauteil (76) zu rechnen ist, wobei die thermische Belastung (b) durch eine Summation und/oder Integration des Anteils des zeitlichen Temperaturverlaufes (T(t)) berechnet wird, bei dem die Temperatur (T) oberhalb der Grenztemperatur ($T_G$) liegt.

2. Verfahren nach Anspruch 1,
bei dem zur Berechnung der thermischen Belastung (b) eine thermische Zeitkonstante (Z) des elektrischen Bauteils (76) herangezogen wird, welche thermische Zeitkonstante (Z) eine charakteristische Aufwärm- oder Abkühlzeit des elektrischen Bauteils (76) angibt.

3. Verfahren nach Anspruch 2,
bei dem die thermische Belastung (b) aus folgender Formel gewonnen wird:

$$b(t_0) = \frac{1}{A} \int_0^{t_0} T(t) - T_G \quad dt \qquad ,$$

wobei

b($t_0$): die thermische Belastung über die Zeit $t_0$,
T(t): die Temperatur des elektrischen Bauteils in Abhängigkeit von der Zeit,
$T_G$: die Grenztemperatur und
A: eine Integrationskonstante ist.

4. Verfahren nach Anspruch 3, bei dem
die Formel in einen Aufwärmanteil ($b_1$) und einen Abkühlanteil ($b_2$) aufgeteilt wird, wobei sich die thermische Belastung aus einer Summe des Aufwärmanteils und des Abkühlanteils ergibt und wobei der Temperaturverlauf (T(t)) des Abkühlanteils durch ein exponentielles Abklingen approximiert wird.

5. Verfahren nach einem der vorhergehenden Ansprüche, bei dem der zeitliche Temperaturverlauf (T(t)) gemessen wird.

6. Verfahren nach einem der Ansprüche 1 bis 4, bei dem der zeitliche Temperaturverlauf (T(t)) berechnet wird.

7. Verfahren nach Anspruch 6,
bei dem die Temperatur (T) des elektrischen Bauteils (76) in Abhängigkeit des elektrischen Stroms (I) berechnet wird, wobei aus dem zeitlichen Verlauf (I(t)) des elektrischen Stroms (I) der zeitliche Temperaturverlauf (T(t)) berechnet wird.

**8.** Verfahren nach einem der vorhergehenden Ansprüche, bei dem das elektrische Bauteil (76) eine Läufer- oder Statorwicklung (76A, 76B) oder ein Schleifring (71) oder eine Erregereinrichtung eines Generators (70) ist, insbesondere eines Turbogenerators mit einer Leistung größer als 10 MVA, insbesondere größer als 100 MVA.

**9.** Verfahren nach Anspruch 8,
bei dem der elektrische Strom (I) ein Erregerstrom (I) durch die Läuferwicklung (76A) ist, wobei eine als Stoßerregung (S1) bezeichnete, schlagartige Erhöhung des Erregerstroms (I) auf einen Mehrbedarfswert ($I_M$) erfolgt und der Erregerstrom (I) über eine Haltedauer ($t_H$) auf dem Mehrbedarfswert ($I_M$) gehalten wird und wobei die Haltedauer ($t_H$) anhand der thermischen Belastung (b) bestimmt wird.

**10.** Verfahren nach 9,
bei dem eine erste Stoßerregung ($S_1$) erfolgt, wobei eine auf die erste Stoßerregung folgende zweite Stoßerregung ($S_2$) nur dann zugelassen wird, wenn die Temperatur (T) der Läuferwicklung unterhalb der Grenztemperatur ($T_G$) liegt.

**11.** Verfahren nach einem der vorhergehenden Ansprüche, bei dem eine Kühlfluidtemperatur ($T_K$) eines Kühlfluides für das Bauteil (76) gemessen und die Bauteiltemperatur (T) des elektrischen Bauteils (76) mittels des elektrischen Stroms (I) und der Kühlfluidtemperatur ($T_K$) berechnet wird, wobei der elektrische Strom (I) so begrenzt wird, daß die Bauteiltemperatur (T) einen vorgegebenen Maximalwert ($T_M$) nicht überschreitet.

**12.** Verfahren nach Anspruch 11,
bei dem die Bauteiltemperatur (T) unter Berücksichtigung

• des thermischen Widerstands ($R_T$) der elektrischen Bauteils (76),
• des ohmschen Widerstands ($R_o$) der elektrischen Bauteils (76) und

der nichtelektrischen Verluste ($T_R$)
berechnet wird.

**13.** Begrenzungsvorrichtung (1) für einen elektrischen Strom (I) durch ein elektrisches Bauteil (76), mit einer Integrationseinheit (37) zur Integration oder Summation eines zeitlichen Verlaufs (T(t)) einer Bauteiltemperatur (T) zur Ermittlung einer thermischen Belastung (b) des Bauteils (76) als Maß für dessen Materialbeanspruchung aufgrund von über einen Zeitbereich oberhalb einer Grenztemperatur ($T_G$) vorliegenden Temperaturen und mit einer mit der Integrationseinheit (37) verbundenen Begrenzungseinheit (8) zur Begrenzung des Stroms (I) in Abhängigkeit von einem Ausgabesignal der Integrationseinheit (37).

**14.** Begrenzungsvorrichtung nach Anspruch 13,
bei der das elektrische Bauteil (76) Bestandteil eines Turbogenerators (70) mit einer Leistung größer als 10 MVA, insbesondere größer als 100 MVA, ist.

**Claims**

**1.** Method for limiting an electric current (I) through an electrical component (76), in which a time temperature profile (T(t)) is determined for the electrical component (76) and a thermal load (b) for the electrical component (76) is obtained from this, with the electric current (I) being limited such that the thermal load (b) remains below a load maximum value ($b_M$) which can be predetermined, **characterized in that** a temperature limit ($T_G$) for the electrical component (76) is defined **in that** thermal damage to the electrical component (76) can be expected above the temperature limit ($T_G$), with the thermal load (b) being calculated by summation and/or integration of the proportion of the time temperature profile (T(t)) for which the temperature (T) is above the temperature limit ($T_G$).

**2.** Method according to Claim 1,
in which a thermal time constant (Z) of the electrical component (76) is used to calculate the thermal load (b), which thermal time constant (Z) indicates a characteristic warming-up or cooling-down time for the electrical component (76).

**3.** Method according to Claim 3,
in which the thermal load (b) is obtained from the following formula:

$$b(t_0) = \frac{1}{A} \int_0^{t_0} T(t) - T_G \ dt$$

where

b($t_0$): is the thermal load over the time to,
T(t): is the temperature of the electrical component as a function of time,
$T_G$: is the temperature limit, and
A: is an integration time constant.

**4.** Method according to Claim 3, in which the formula is split into a warming-up element ($b_1$) and a cooling-down element ($b_2$), with the thermal load being obtained from a sum of the warming-up element and the cooling-down element, and with the temperature profile (T(t)) of the cooling-down element being approximated by an exponential decay.

**5.** Method according to one of the preceding claims, in which the time temperature profile (T(t)) is measured.

**6.** Method according to one of Claims 1 to 4, in which the time temperature profile (T(t)) is calculated.

**7.** Method according to Claim 6,
in which the temperature (T) of the electrical component (76) is calculated as a function of the electric current (I), with the time temperature profile (T (t)) being calculated from the time profile (I(t)) of the electric current (I).

**8.** Method according to one of the preceding claims, in which the electrical component (76) is a rotor or stator winding (76A, 76B) or slipring (71) or an excitation device for a generator (70), in particular a turbogenerator having a rating of more than 10 MVA, in particular of more than 100 MVA.

**9.** Method according to Claim 8,
in which the electric current (I) is a field current (I) through the rotor winding (76A), with a sudden increase in the field current (I) which is referred to as field forcing (S1), taking place to an additional demand value ($I_M$), and the field current (I) being maintained at the additional demand value ($I_M$) for a maintenance period ($t_H$), and with the maintenance period ($t_H$) being determined on the basis of the thermal load (b) .

**10.** Method according to Claim 9,
in which first field forcing ($S_1$) takes place, with second field forcing ($S_2$), which follows the first field forcing, being allowed only when the temperature (T) of the rotor winding is below the temperature limit ($T_G$) .

**11.** Method according to one of the preceding claims, in which a cooling fluid temperature ($T_K$) of a cooling fluid for the component (76) is measured, and the component temperature (T) of the electrical component (76) is calculated by means of the electric current (I) and the cooling fluid temperature ($T_K$), with the electric current (I) being limited such that the component temperature (T) does not exceed a predetermined maximum value ($T_M$) .

**12.** Method according to Claim 11,
in which the component temperature (T) is calculated taking account

• of the thermal resistance ($R_T$) of the electrical component (76),
• of the electrical resistance ($R_0$) of the electrical component (76), and

the non-electrical losses ($T_R$).

**13.** Limiting apparatus (1) for the electric current (I) through an electrical component (76), having an integration unit (37) for integration or summation of a time profile (T(t)) of a component temperature (T) in order to determine a thermal load (b) on the component (76) as a measure of its material stress resulting from temperatures being present for a period of time above a temperature limit ($T_G$), and having a limiting unit (8) which is connected to the integration unit (37),for limiting the current (I) as a function of an output signal from the integration unit (37).

**14.** Limiting apparatus according to Claim 13,
in which the electrical component (76) is a component of a turbogenerator (70) having a rating of more than 10 MVA, in particular of more than 100 MVA.

**Revendications**

**1.** Procédé de limitation d'un courant (I) électrique passant dans un composant (76) électrique, dans lequel on détermine une courbe (T(t)) de variation de la température en fonction du temps pour le composant (76) électrique et on en obtient une charge (b) thermique du composant (76) électrique, le courant (I) électrique étant limité de façon à ce que la charge (b) thermique reste inférieure à une valeur ($b_M$) maximum de charge qui peut être prescrite, **caractérisé en ce que**
on définit une température ($T_G$) limite du composant (76) électrique par le fait que l'on doit s'attendre au-dessus de la température ($T_G$) limite à des endommagements thermiques du composant (76) électrique, la charge (b) thermique étant calculée par une sommation et/ou intégration de la partie de la courbe (T(t)) de variation de la température en fonction du temps, dans laquelle la température (T) est au-dessus de la température ($T_G$) limite.

**2.** Procédé suivant la revendication 1, dans lequel on tire parti, pour le calcul de la charge (b) thermique, d'une constante (Z) de temps thermique du composant (76) électrique, constante (Z) de temps thermique qui indique une durée caractéristique de réchauffement et de refroidissement du composant (76) électrique.

**3.** Procédé suivant la revendication 2, dans lequel on obtient la charge (b) thermique par la formule suivante :

$$b(t_0) = \frac{1}{A} \int_0^{t_0} T(t) - T_G \quad dt \qquad ,$$

dans laquelle
$b(t_0)$ est la charge thermique pendant la durée $t_0$,
T(t) est la variation de la température du composant électrique en fonction du temps,
$T_G$ est la température limite et
A est une constante d'intégration.

**4.** Procédé suivant la revendication 3, dans lequel on subdivise la formule en une partie ($b_1$) de chauffage et en une partie ($b_2$) de refroidissement, la charge thermique étant donnée par une somme de la partie de chauffage et de la partie de refroidissement, et la courbe (T(t)) de variation de la température de la partie de refroidissement étant obtenue par approximation suivant une décroissance exponentielle.

**5.** Procédé suivant l'une des revendications précédentes, dans lequel on mesure la courbe (T(t)) de variation de la température en fonction du temps.

**6.** Procédé suivant l'une des revendications 1 à 4, dans lequel on calcule la courbe (T(t)) de variation de la température en fonction du temps.

**7.** Procédé suivant la revendication 6, dans lequel on calcule la température (T) du composant (76) électrique en fonction du courant (I) électrique, en calculant à partir de la courbe (I(t)) de variation du courant (I) électrique en fonction du temps la courbe (T(t)) de variation de la température en fonction du temps.

**8.** Procédé suivant l'une des revendications précédentes, dans lequel le composant (76) électrique est un enroulement (76A, 76B) de rotor ou de stator ou une bague (71) collectrice ou un dispositif d'excitation d'un alternateur (70), notamment d'un turbo-alternateur d'une puissance supérieure à 10 MVA, notamment supérieure à 100 MVA.

**9.** Procédé suivant la revendication 8, dans lequel le courant (I) électrique est un courant (I) d'excitation passant dans l'enroulement (76A) du rotor, une augmentation brusque désignée par excitation de choc (S1) du courant (I) d'excitation s'effectuant jusqu'à une valeur ($I_M$) de besoin supplémentaire et le courant (I) d'excitation étant maintenu pendant une durée ($t_H$) de maintien à la valeur ($I_M$) de besoin supplémentaire et la durée ($t_H$) de maintien étant déterminée au moyen de la charge (b) thermique.

**10.** Procédé suivant la revendication 9, dans lequel il s'effectue une première excitation de choc ($S_1$), une deuxième excitation de choc ($S_2$) suivant la première excitation de choc n'étant autorisée que si la température (T) de l'enroulement du rotor est inférieure à la température ($T_G$) limite.

**11.** Procédé suivant l'une des revendications précédentes, dans lequel on mesure une température ($T_K$) d'un fluide de refroidissement du composant (76) et l'on calcule la température (T) du composant (76) électrique au moyen du courant (I) électrique et de la température ($T_K$) du fluide de refroidissement, le courant (I) électrique étant limité de façon à ce que la température (T) du composant ne dépasse pas une valeur ($T_M$) maximum prescrite.

**12.** Procédé suivant la revendication 11, dans lequel on calcule la température (T) du composant en tenant compte

- de la résistance ($R_T$) thermique du composant (76) électrique,
- de la résistance ($R_0$) ohmique du composant (76) électrique et

des pertes ($T_R$) qui ne sont pas électriques.

**13.** Dispositif (1) de limitation d'un courant (I) électrique passant par un composant (76) électrique comprenant une unité (37) d'intégration ou de sommation d'une courbe (T(t)) de variation d'une température (T) du composant en fonction du temps pour déterminer une charge (b) thermique du composant (76) en tant que mesure de sa sollicitation de matériau sur la base de températures au-dessus d'une température ($T_G$) limite, pendant un laps de temps et une unité (8) de limitation reliés à l'unité (37) d'intégration, pour limiter le courant (I) en fonction d'un signal de sortie de l'unité (37) d'intégration.

**14.** Dispositif de limitation suivant la revendication 13, dans lequel le composant (76) électrique fait partie d'un turbo-alternateur (70) d'une puissance supérieure à 10 MVA, notamment supérieure à 100 MVA.

FIG 1

FIG 2

FIG 3